(19) Europäisches Patentamt / European Patent Office / Office européen des brevets

(11) **EP 4 371 733 A1**

## (12) EUROPEAN PATENT APPLICATION
published in accordance with Art. 153(4) EPC

(43) Date of publication:
**22.05.2024   Bulletin 2024/21**

(21) Application number: **22841885.1**

(22) Date of filing: **21.06.2022**

(51) International Patent Classification (IPC):
*B29C 55/12* (2006.01)      *B32B 27/32* (2006.01)
*B65D 65/40* (2006.01)      *C08F 10/06* (2006.01)
*C08L 23/12* (2006.01)      *C08J 5/18* (2006.01)

(52) Cooperative Patent Classification (CPC):
**B29C 55/12; B32B 27/32; B65D 65/40;
C08F 10/06; C08J 5/18; C08L 23/12**

(86) International application number:
**PCT/JP2022/024733**

(87) International publication number:
**WO 2023/286541 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2021   JP 2021117964
30.08.2021   JP 2021139911
30.08.2021   JP 2021139910**

(71) Applicant: **TOYOBO CO., LTD.**
**Osaka-shi, Osaka 530-0001 (JP)**

(72) Inventors:
• **TANEKI, Kensuke**
  **Inuyama-shi, Aichi 484-8508 (JP)**
• **IMAI, Toru**
  **Inuyama-shi, Aichi 484-8508 (JP)**

(74) Representative: **Vossius & Partner
Patentanwälte Rechtsanwälte mbB
Siebertstrasse 3
81675 München (DE)**

## (54) BIAXIALLY ORIENTED LAMINATED POLYPROPYLENE FILM

(57)    An object of the present invention is to provide a biaxially oriented polypropylene film having low heat shrinkage rate at 150°C comparable to that of biaxially oriented PET film, and high stiffness and high laminate strength. A biaxially oriented laminated polypropylene film comprising at least a base layer A and a surface layer B, each of which comprises a resin composition containing a polypropylene resin as a main component, wherein the biaxially oriented laminated polypropylene film satisfies the following requirements 1) to 7): 1) a rate of a thickness of the base layer A with respect to a whole thickness of the film is 70% or more and 98% or less, 2) a polypropylene resin comprised in the base layer A has a mesopentad fraction of 97.0% or more and 99.9% or less, 3) a polypropylene resin comprised in the surface layer B has a mesopentad fraction of 80.0% or more and 96.5% or less, 4) a stress at 5% elongation F5 in a longitudinal direction of the film is 35 MPa or more, 5) a stress at 5% elongation F5 in a width direction of the film is 95 MPa or more, 6) a heat shrinkage rate at 150°C in the longitudinal direction of the film is 6.0% or less, and 7) a heat shrinkage rate at 150°C in the width direction of the film is 5.0% or less.

**Description**

TECHNICAL FIELD

The present invention relates to a biaxially oriented and laminated polypropylene film (hereinafter referred to as biaxially oriented laminated polypropylene film) having high heat-resistance and high stiffness.

BACKGROUND ART

Biaxially oriented polypropylene films have been used in packaging and industrial applications because the films have characteristics of high moisture-resistance in addition to heat-resistance and stiffness required, and the purposes of use of the films have become more and more widespread.

In recent years, a mono-material package made from a single resin raw material has been expected in consideration of environmental impact of packaging materials (recyclability). For this reason, a polypropylene mono-material package including a biaxially oriented polypropylene film as a base film and an unstretched polypropylene film as a sealant film has been expected.

In order to increase heat-resistance and stiffness of biaxially oriented polypropylene film, for example, Patent Document 1 discloses a method in which a stretched film in the width direction is further stretched in the longitudinal direction, in the production process of the biaxially oriented polypropylene film. Patent Document 2 discloses a method, for example, in which a stretched film in the width direction is heat treated at a temperature equal to or lower than a stretching temperature in the width direction while being relaxed in a first stage and subsequently heat treated at a temperature in the range of the heat treatment temperature in the first stage to a stretching temperature in the width direction in a second stage, in the production process of the biaxially oriented polypropylene film.

However, films disclosed in Patent Documents 1 and 2 are easily wrinkled at sealed portions after heat-sealing, therefore, the films cannot cover all the applications of biaxially oriented PET films.

In addition, a stretched polypropylene film having comparable heat-resistance at 150°C to that of biaxially oriented PET film is disclosed, for example, in Patent Documents 3 and 4, however, further improvement in laminate strength is expected.

CITATION LIST

PATENT DOCUMENT

Patent Document 1: JP-A-2013-177645
Patent Document 2: WO 2016/182003
Patent Document 3: WO 2013/111779
Patent Document 4: WO 2017/169952

SUMMARY OF THE INVENTION

PROBLEMS TO BE SOLVED BY THE INVENTION

It is an object of the present invention to provide a solution to above problems. In other words, it is an object of the present invention to provide a biaxially oriented polypropylene film having high heat-resistance and high stiffness, specifically, to provide a biaxially oriented polypropylene film having comparable heat-resistance at 150°C to that of biaxially oriented PET film, and high stiffness and high laminate strength.

MODE FOR CARRYING OUT THE INVENTION

As a result of earnest studies, the present inventors have found that a biaxially oriented polypropylene film having high heat-resistance, high stiffness, and high laminate strength could be obtained by controlling a laminate structure, raw material composition of each layer, and film characteristics of a biaxially oriented polypropylene film.

That is, the biaxially oriented polypropylene film according to the present invention has the following features.

[1] A biaxially oriented laminated polypropylene film comprising at least a base layer A and a surface layer B, wherein the biaxially oriented laminated polypropylene film satisfies the following requirements 1) to 7):

1) a rate of a thickness of the base layer A with respect to a whole thickness of the film is 70% or more and 98% or less,

2) a polypropylene resin comprised in the base layer A has a mesopentad fraction of 97.0% or more and 99.9% or less,

3) a polypropylene resin comprised in the surface layer B has a mesopentad fraction of 80.0% or more and 96.5% or less,

4) a stress at 5% elongation F5 in a longitudinal direction of the film is 35 MPa or more,

5) a stress at 5% elongation F5 in a width direction of the film is 95 MPa or more,

6) a heat shrinkage rate at 150°C in the longitudinal direction of the film is 6.0% or less, and

7) a heat shrinkage rate at 150°C in the width direction of the film is 5.0% or less.

[2] The biaxially oriented laminated polypropylene film according to [1], wherein the biaxially oriented laminated polypropylene film has a plane orientation coefficient on the surface layer B side of 0.0134 or less.

[3] The biaxially oriented laminated polypropylene film according to [1] or [2], wherein the biaxially oriented laminated polypropylene film has a wetting tension on a film surface on the surface layer B side of 38 mN/m or more.

[4] The biaxially oriented laminated polypropylene film according to any one of [1] to [3], wherein the biaxially oriented laminated polypropylene film has a haze of 5.0% or less.

[5] The biaxially oriented laminated polypropylene film according to any one of [1] to [4], wherein the biaxially oriented laminated polypropylene film has a whole thickness of 5 $\mu$m or more and 60 $\mu$m or less.

[6] A laminated body comprising the biaxially oriented laminated polypropylene film according to any one of [1] to [5] and an unstretched polypropylene film.

[7] The laminated body according to [6], wherein the laminated body has a laminate strength represented by a peel strength when peeled at 90° to form a T-shape of 1.9 N/15 mm or more and 10 N/15 mm or less in both of a longitudinal direction and a width direction of the laminated body.

ADVANTAGEOUS EFFECTS OF THE INVENTION

The biaxially oriented laminated polypropylene film of the present invention has low heat shrinkage rate at 150°C comparable to that of biaxially oriented PET film, and high stiffness and high laminate strength; therefore, the biaxially oriented laminated polypropylene film in combination with a sealant film comprising a polypropylene resin can be suitably used as a mono-material package.

MODE FOR CARRYING OUT THE INVENTION

Hereinafter, the biaxially oriented laminated polypropylene film according to the present invention will be described in detail.

The biaxially oriented laminated polypropylene film according to the present invention is a biaxially oriented laminated polypropylene film comprising at least a base layer A and a surface layer B. Each of the base layer A and the surface layer B comprises a polypropylene resin composition, and each of the polypropylene resin composition comprises a polypropylene resin as a main component. The term "main component" means that a polypropylene resin composition comprises a polypropylene resin in an amount of 90% by mass or more, more preferably 93% by mass or more, further preferably 95% by mass or more, and particularly preferably 97% by mass or more.

Hereinafter, descriptions of the base layer A and the surface layer B will be provided.

[Base layer A]

(Stereoregularity of polypropylene resin comprised in base layer A)

A polypropylene resin comprised in the base layer A of the present invention has a mesopentad fraction ([mmmm]%), which is an index of stereoregularity, of 97.0% or more and 99.9% or less, preferably 97.5% or more and 99.7% or less, more preferably 98.0% or more and 99.5% or less, and further preferably 98.5% or more and 99.3% or less. When a mixture of several types of polypropylene resins is comprised in the base layer A, the mesopentad fraction of the mixture should preferably fall within the same range as the mentioned above.

When the polypropylene resin comprised in the base layer A has a mesopentad fraction of 97.0% or more, crystallinity of the polypropylene resin is increased, and thus a melting point of crystals, crystallinity, and the degree of crystal orientation in the film are increased; therefore, heat-resistance at high temperature and stiffness can be achieved. The mesopentad fraction of 99.9% or less is preferred in that breakage in film production is decreased and the production cost of the polypropylene resin can be decreased. The mesopentad fraction is measured by nuclear magnetic resonance spectroscopy, known as NMR method.

The polypropylene resin can have a mesopentad fraction controlled to above range by employing a means in which the obtained polypropylene resin powder is washed with solvents such as n-heptane, a catalyst and/or a co-catalyst is selected, and components of a polypropylene resin composition is appropriately selected.

(Polypropylene resin comprised in base layer A)

A polypropylene resin comprised in the base layer A of the present invention may be a polypropylene homopolymer or a copolymer of propylene and monomer consisting of ethylene and/or α-olefin having 4 or more carbon atoms. The polypropylene resin is preferably a polypropylene homopolymer substantially free from a component of ethylene and/or α-olefin having 4 or more carbon atoms. Even if the polypropylene resin contains the component of ethylene and/or α-olefin having 4 or more carbon atoms, the amount of the component is preferably 1 mol% or less. The upper limit of the component is more preferably 0.5 mol%, further preferably 0.3 mol%, particularly preferably 0.1 mol%, and most preferably 0%. By adjusting the amount of the component to the above range, stiffness and heat-resistance can be achieved. Examples of the α-olefin having 4 or more carbon atoms constituting the copolymer include 1-butene, 1-pentene, 3-methylpentene-1,3-methylbutene-1,1-hexene, 4-methylpentene-1,5-ethylhexene-1,1-octene, 1-decene, 1-dodecene, 1-tetradecene, 1-hexadecene, 1-heptadecene, 1-octadecene, and 1-eicosene. The polypropylene resin may comprise two or more different polypropylene homopolymers, copolymers of propylene and monomer consisting of ethylene and/or α-olefin having 4 or more carbon atoms, and a mixture thereof.

(Melting temperature of polypropylene resin comprised in base layer A)

A polypropylene resin comprised in the base layer A has the lower limit of a melting temperature measured by DSC (Tm) (hereinafter may be referred to as TmA) of preferably 160°C, more preferably 161°C, further preferably 162°C, and furthermore preferably 163°C. The polypropylene resin having TmA of 160°C or higher may lead to a film having heat-resistance at high temperature and stiffness.

The upper limit of TmA is preferably 180°C and more preferably 178°C. When the polypropylene resin has TmA of 180°C or lower, production cost of polypropylene resin may be kept from being increased.

When a mixture of several types of polypropylene resins is comprised in the base layer A, TmA of the mixture should preferably fall within the same range as mentioned above.

Tm is a main peak temperature of an endothermic peak observed in melting of approximately 5 mg of a sample placed in an aluminum pan and set to a differential scanning calorimeter (DSC), by heating the sample and the aluminum pan to 230°C at a scanning rate of 10°C/min, melting the sample at 230°C for 5 minutes, lowering the temperature to 30°C at a scanning rate of -10°C/min, keeping the sample for 5 minutes, and heating the sample and the aluminum at a scanning rate of 10°C/min under nitrogen atmosphere. When several peaks are observed, a temperature of a peak on lower temperature side is determined as Tm.

(Crystallization temperature of polypropylene resin comprised in base layer A)

A polypropylene resin comprised in the base layer A has the lower limit of a crystallization temperature measured by DSC (Tc: hereinafter may be referred to as Tc) of 105°C, preferably 108°C, more preferably 110°C, and further preferably 114°C. When Tc is 105°C or higher, crystallization may be promoted, and the obtained film can achieve heat-resistance at high temperature and stiffness.

The upper limit of Tc is preferably 135°C, more preferably 133°C, further preferably 132°C, furthermore preferably 130°C, particularly preferably 128°C, and most preferably 127°C. When the polypropylene resin has Tc of 135°C or lower, production cost of polypropylene may be kept from being increased and breakage in film formation can be prevented.

When a mixture of several types of polypropylene resins is comprised in the base layer A, the crystallization temperature of the mixture should preferably fall within the same range as the mentioned above.

Tc is a main peak temperature of an exothermic peak of approximately 5 mg of a sample placed in an aluminum pan and set to a differential scanning calorimeter (DSC) and the peak is observed by heating the sample and the aluminum pan to 230°C at a scanning rate of 10°C/min, melting the sample at 230°C for 5 minutes, and lowering the temperature to 30°C at a scanning rate of -10°C/min under nitrogen atmosphere. When several peaks are observed, a temperature of a peak on lower temperature side is determined as Tc.

The crystallization temperature can be raised by blending a crystal nucleating agent with the polypropylene resin.

(Melt flow rate of polypropylene resin comprised in base layer A)

A polypropylene resin comprised in the base layer A has a melt flow rate (MFR: hereinafter may be referred to as MFR) of preferably 6.0 g/10 min or more and 10 g/10 min or less, more preferably 6.2 g/10 min or more and 9.0 g/10 min or less, further preferably 6.3 g/10 min or more and 8.5 g/10 min or less, particularly preferably 6.4 g/10 min or more and 8.0 g/10 min or less, and most preferably 6.5 g/10 min or more and 7.5 g/10 min or less when measured under condition M (230°C, 2.16 kgf) in accordance with JIS K 7210 (1995).

When a mixture of several types of polypropylene resins is comprised in the base layer A, the mixture has MFR of preferably 6.0 g/10 min or more and 10 g/10 min or less, more preferably 6.2 g/10 min or more and 9.0 g/10 min or less, further preferably 6.3 g/10 min or more and 8.5 g/10 min or less, particularly preferably 6.4 g/10 min or more and 8.0 g/10 min or less, and most preferably 6.5 g/10 min or more and 7.5 g/10 min or less.

A polypropylene resin having MFR of 6.0 g/10 min or more may lead to production of a biaxially oriented polypropylene film having low heat shrinkage. In addition, a polypropylene resin having MFR of 10 g/10 min or less may lead to excellent film formability.

When a mixture of several types of polypropylene resins is comprised in the base layer A, each polypropylene resin has MFR of preferably 2.5 g/10 min or more and 30 g/10 min or less, more preferably 3.5 g/10 min or more and 25 g/10 min or less, further preferably 4.5 g/10 min or more and 22 g/10 min or less, particularly preferably 5.5 g/10 min or more and 20 g/10 min or less, and most preferably 6.0 g/10 min or more and 20 g/10 min or less.

In order to control MFR of the polypropylene resin to the above range, a method for controlling an average molecular weight or a molecular weight distribution of polypropylene resin can be employed.

(Antistatic agent for base layer A)

A propylene resin composition comprised in the base layer A may contain an antistatic agent of, for example, a diethanolamine fatty acid ester compound, an amine compound, and a glycerol mono-fatty acid ester compound. By containing such an antistatic agent at a prescribed rate, a biaxially oriented polypropylene film having sufficient initial antistatic property and excellent long-lasting antistatic property can be produced. Further, the obtained film barely has a decrease in transparency from initial level even after exposure to high temperature, and the film does not even have stickiness.

The antistatic agent contained in the base layer A migrates to the film surface of the surface layer B due to bleed-out, and can remain there.

(Other additives for base layer A)

The polypropylene resin composition comprised in the base layer A may contain various types of additives other than antistatic agent for quality improvement as long as the effect of the present invention is not impaired. Examples of the additives include an antiblocking agent of fine particles for productivity improvement, lubricants such as wax and metal soap, plasticizer, a processing aid, a known heat stabilizer, a known antioxidant, and a known ultraviolet absorber commonly added to a polypropylene-based film.

Examples of the fine particles include inorganic fine particles such as silicon dioxide, calcium carbonate, titanium dioxide, talc, kaolin, mica, and zeolite. The inorganic fine particles may have any shape, such as spherical, elliptical, conical, or irregular shape, and the inorganic fine particles having an appropriate particle size according to film application and use can be used and blended.

Examples of the fine particles include organic fine particles such as cross-linked particles of acrylic resin, methyl acrylate resin, and styrene-butadiene resin. Like the inorganic fine particles, various organic fine particles having different shapes and sizes can be used as the organic fine particles. In addition, various surface treatments can be performed on the surfaces of these inorganic and organic fine particles. The particles can be used alone or in combination of two or more.

[Surface layer B]

(Stereoregularity of polypropylene resin comprised in surface layer B)

A polypropylene resin comprised in the surface layer B of the present invention has a mesopentad fraction ([mmmm]%), which is an index of stereoregularity, of 80.0% or more and 96.5% or less, preferably 85.0% or more and 96.5% or less, and more preferably 90.0% or more and 96.5% or less.

When a mixture of several types of polypropylene resins is comprised in the surface layer B, the mesopentad fraction of the mixture should preferably fall within the same range as the mentioned above.

When a mixture of several types of polypropylene resins is comprised in the surface layer B, each of the polypropylene resin has a mesopentad fraction of preferably 80.0% or more and 98.0% or less.

When the polypropylene resin comprised in the surface layer B has a mesopentad fraction of 96.5% or less, a laminated body obtained by laminating a sealant film has increased laminate strength. When the polypropylene resin comprised in the surface layer B has a mesopentad fraction of 80.0% or more, stiffness and heat-resistance of the film can be achieved. The mesopentad fraction is measured by nuclear magnetic resonance spectroscopy, known as NMR method.

(Polypropylene resin comprised in surface layer B)

A polypropylene resin comprised in the surface layer B may be a polypropylene homopolymer or a copolymer of propylene and monomer consisting of ethylene and/or $\alpha$-olefin having 4 or more carbon atoms. The polypropylene resin is preferably a polypropylene homopolymer substantially free from a component of ethylene and/or $\alpha$-olefin having 4 or more carbon atoms. Even if the polypropylene resin contains the component of ethylene and/or $\alpha$-olefin having 4 or more carbon atoms, the upper limit of the amount of the component is preferably 1 mol% or less, more preferably 0.5 mol%, further preferably 0.3 mol%, particularly preferably 0.1 mol%, and most preferably 0%.

By adjusting the amount of the component to the above range, stiffness and heat-resistance can be achieved. Examples of the $\alpha$-olefin having 4 or more carbon atoms constituting the copolymer include 1-butene, 1-pentene, 3-methylpentene-1,3-methylbutene-1,1-hexene, 4-methylpentene-1,5-ethylhexene-1,1-octene, 1-decene, 1-dodecene, 1-tetradecene, 1-hexadecene, 1-heptadecene, 1-octadecene, and 1-eicosene. The polypropylene resin may comprise two or more different polypropylene homopolymers, copolymers of propylene and monomer consisting of ethylene and/or $\alpha$-olefin having 4 or more carbon atoms, and a mixture thereof.

(Melting temperature of polypropylene resin comprised in surface layer B)

A polypropylene resin comprised in the surface layer B has the lower limit of a melting temperature measured by DSC (Tm) (hereinafter may be referred to as TmB) of preferably 152°C, more preferably 154°C, further preferably 156°C, and furthermore preferably 158°C. The polypropylene resin having TmB of 154°C or higher may lead to a film having heat-resistance at high temperature and stiffness.

The upper limit of TmB is preferably 170°C, more preferably 169°C, further preferably 168°C, furthermore preferably 167°C, and particularly preferably 166°C. When the polypropylene resin has TmB of 170°C or lower, production cost of polypropylene resin may be kept from being increased and breakage in film formation can be prevented. In addition, the laminate strength may be increased.

When a mixture of several types of polypropylene resins is comprised in the surface layer B, TmB of the mixture should preferably fall within the same range as mentioned above.

Tm is a main peak temperature of an endothermic peak observed in melting of approximately 5 mg of a sample placed in an aluminum pan and set to a differential scanning calorimeter (DSC), by heating the sample and the aluminum pan to 230°C at a scanning rate of 10°C/min, melting the sample at 230°C for 5 minutes, lowering the temperature to 30°C at a scanning rate of -10°C/min, keeping the sample for 5 minutes, and heating the sample and the aluminum at a scanning rate of 10°C/min under nitrogen atmosphere. When several peaks are observed, a temperature of a peak on lower temperature side is determined as Tm.

(Crystallization temperature of polypropylene resin comprised in surface layer B)

A polypropylene resin comprised in the surface layer B has the lower limit of crystallization temperature measured by DSC (Tc) of 95°C, preferably 100°C, and more preferably 105°C. When Tc is 95°C or higher, crystallization may be promoted, and the obtained film can achieve heat-resistance at high temperature and stiffness.

The upper limit of Tc is preferably 115°C and more preferably 113°C. When Tc is 115°C or lower, crystalline orientation of the surface layer B is prevented, thereby leading to an increase in laminate strength.

When a mixture of several types of polypropylene resins is comprised in the surface layer B, Tc of the mixture should preferably fall within the same range as the mentioned above.

Tc is a main peak temperature of an exothermic peak of approximately 5 mg of a sample placed in an aluminum pan and set to DSC, and the peak is observed by heating the sample and the aluminum pan to 230°C at a scanning rate of 10°C/min, melting the sample at 230°C for 5 minutes, and lowering the temperature to 30°C at a scanning rate of -10°C/min under nitrogen atmosphere. When several peaks are observed, a temperature of a peak on lower temperature side is determined as Tc.

(Melt flow rate of polypropylene resin comprised in surface layer B)

A polypropylene resin comprised in the surface layer B has a melt flow rate (MFR) of preferably 2.8 g/10 min or more and 5.0 g/10 min or less, more preferably 3.0 g/10 min or more and 5.0 g/10 min or less, further preferably 3.0 g/10 min or more and 4.5 g/10 min or less, and furthermore preferably 3.0 g/10 min or more and 4.0 g/10 min or less under condition M (230°C, 2.16 kgf) of JIS K 7210 (1995).

When a mixture of several types of polypropylene resins is comprised in the surface layer B, the mixture has MFR of preferably 2.8 g/10 min or more and 5.0 g/10 min or less, more preferably 3.0 g/10 min or more and 5.0 g/10 min or less, further preferably 3.0 g/10 min or more and 5.0 g/10 min or less, and furthermore preferably 3.0 g/10 min or more and 4.0 g/10 min or less.

A polypropylene resin having MFR of 2.8 g/10 min or more may lead to production of biaxially oriented polypropylene film having low heat shrinkage. In addition, a polypropylene resin having MFR of 5.0 g/10 min or less may lead to excellent film formability and defects may be unlikely to be generated in film formation.

When a mixture of several types of polypropylene resins is comprised in the surface layer B, each polypropylene resin has MFR of preferably 2.0 g/10 min or more and 5.0 g/10 min or less, more preferably 2.2 g/10 min or more and 5.0 g/10 min or less, and further preferably 2.3 g/10 min or more and 4.5 g/10 min or less.

The polypropylene resin comprised in the surface layer B preferably has closer MFR to that of a polypropylene resin comprised in the base layer A from the viewpoint of thickness evenness of laminated film.

(Additives for surface layer B)

The polypropylene resin composition comprised in the surface layer B may contain various types of additives for quality improvement, such as slipperiness and antistatic property, as long as the effect of the present invention is not impaired. Examples of the additives include an antiblocking agent of fine particles for productivity improvement, lubricants such as wax and metal soap, plasticizer, a processing aid, a known heat stabilizer, a known antioxidant, a known ultraviolet absorber, and a known inorganic or organic fine particles commonly added to a polypropylene film.

Examples of the fine particles include inorganic fine particles such as silicon dioxide, calcium carbonate, titanium dioxide, talc, kaolin, mica, and zeolite. The inorganic fine particles may have any shape, such as spherical, elliptical, conical, or irregular shape, and the inorganic fine particles having an appropriate particle size according to film application and use can be used and blended.

Examples of the fine particles include organic fine particles such as cross-linked particles of acrylic resin, methyl acrylate resin , and styrene-butadiene resin. Like the inorganic fine particles, various organic fine particles having different shapes and sizes can be used as the organic fine particles. In addition, various surface treatments can be performed on the surfaces of these inorganic and organic fine particles. The particles can be used alone or in combination of two or more.

(Antifogging agent for base layer A and surface layer B)

The biaxially oriented laminated polypropylene film of the present invention may contain an antifogging agent in an amount of from 0.2 to 5% by mass. The antifogging agent is exemplified by an acid ester of polyhydric alcohol, an amine of higher fatty acid, an amide of higher fatty acid, an ethylene oxide adduct of amine or amide of higher fatty acid. By containing the antifogging agent in such a manner, the biaxially oriented laminated polypropylene film can be suitably applied in packaging of fresh products requiring freshness to be kept, such as vegetables, fruits, and flowers. The antifogging agent may be contained in the base layer A and/or the surface layer B. The antifogging agent contained in the base layer A migrates to the film surface of the surface layer B due to bleed-out, so that antifogging property is exhibited.

[Thicknesses of base layer A and surface layer B and layer-structure]

The biaxially oriented laminated polypropylene film of the present invention has the lower limit of a whole thickness of, though it may change according to application and use, preferably 5 μm, more preferably 6 μm, further preferably 8 μm, and particularly preferably 10 μm from the viewpoint of film strength and resource saving. The upper limit is preferably 60 μm, more preferably 40 μm, further preferably 35 μm, particularly preferably 25 μm, and most preferably 19 μm. Controlling of a whole thickness of the film to above range may lead to a thinner film having required strength, thereby contributing to resource saving. In some cases, a film having a whole thickness more than 60 μm is preferred according to applications, and a film having a whole thickness of up to 200 μm can be generally used.

The lower limit of the thickness of the base layer A is, though it may change according to application and use, preferably 5 μm from the viewpoint of stiffness and water vapor barrier property of the film. The upper limit of the thickness of the base layer A is preferably 50 μm, more preferably 35 μm, further preferably 20 μm or less, and particularly

preferably 18 μm from the viewpoint of transparency and an effect on the environment. In some cases, a base layer A having a thickness of more than 50 μm is preferred according to applications, and a base layer A having a thickness of up to 200 μm can be generally used.

The lower limit of the thickness of the surface layer B is, though it may change according to application and use, preferably 0.3 μm, more preferably 0.5 μm, and further preferably 0.8 μm or more from the viewpoint of laminate strength and antistatic property of the film.

The upper limit of the thickness of the surface layer B is, though it may change according to application and use, preferably 4 μm and more preferably 2 μm from the viewpoint of heat-resistance at high temperature and stiffness of film. The surface layer B with larger thickness may lead to a decrease in plane orientation coefficient.

The lower limit of a rate of a thickness of the base layer A with respect to a whole thickness of the film is 70%, more preferably 75%, further preferably 80%, and particularly preferably 85% from the viewpoint of heat-resistance at high temperature and stiffness.

The upper limit of a rate of a thickness of the base layer A with respect to a whole thickness of the film is preferably 98% or less, more preferably 95% or less, and further preferably 92% or less from the viewpoint of keeping functionality of the surface layer B.

The lower limit of a rate of a thickness of the surface layer B with respect to a whole thickness of the film is preferably 2%, more preferably 3%, further preferably 5%, and particularly preferably 8% from the viewpoint of laminate strength and antistatic property of the film.

The upper limit of a rate of a thickness of the base layer B with respect to a whole thickness of the film is preferably 30% or less, more preferably 23%, further preferably 20% or less, and particularly preferably 15% or less from the viewpoint of heat-resistance at high temperature and stiffness.

(Layer structure)

The biaxially oriented laminated polyolefin film of the present invention has a layer structure of, for example, "surface layer B/base layer A" and "surface layer B /base layer A /surface layer B". Preferably, the base layer A and the surface layer B are directly contacted with one another, however, an intermediate layer may be provided between the base layer A and the surface layer B. The intermediate layer preferably has a raw material composition which falls between raw material compositions for the base layer A and the surface layer B to prevent peeling of the base layer A and the surface layer B.

[Method for forming biaxially oriented laminated polypropylene film]

The biaxially oriented laminated polypropylene film of the present invention is obtained by producing an un-stretched sheet comprising a polypropylene resin composition including above-described polypropylene resin as a main component and then biaxially stretching the unstretched sheet. The unstretched sheet may be biaxially stretched by any of the following methods: an inflation simultaneous biaxial stretching method, a tenter simultaneous biaxial stretching method, and a tenter sequential biaxial stretching method. The unstretched sheet is preferably stretched by a tenter simultaneous biaxial stretching method from the viewpoint of stability in film formation and thickness evenness of the obtained film. In particular, the unstretched sheet is preferably stretched in the longitudinal direction first and then stretched in the width direction, alternatively, the unstretched sheet may be stretched in the width direction first and then stretched in the longitudinal direction.

Next, a method for producing the biaxially oriented laminated polypropylene film of the present invention will be described, but the method is not limited thereto.

Hereinafter, description will be provided with an example of biaxially oriented laminated polypropylene film having a structure of "surface layer B /a base layer A /a surface layer B", which is produced by a tenter simultaneous biaxial stretching method.

First, a molten multi-layered sheet of polypropylene resin composition having a structure of "surface layer B /a base layer A /a surface layer B" is extruded from a T-die.

The molten sheet can be produced, for example, by a method in which polypropylene resins are sent from different flow passages by using 2 or more extruders, stacked into multiple layers by using a multilayer feed block, a static mixer, or a multilayer multi-manifold die, and then co-extruded from a T-die.

Alternatively, even when only one extruder is provided, above-described multilayer device can be introduced in a melt line between the extruder and the T-die.

From the viewpoint of stabilizing back pressure and suppressing thickness nonuniformity, preferred is a method in which a gear pump is installed on a polymer flow passage.

A molten sheet co-extruded from a T-die is brought into contact with a metal cooling roll to be cooled and solidified. In order to accelerate the solidification, a sheet cooled by a cooling roll is preferably further cooled by, for example, immersion in a water bath.

Then, the sheet is stretched in the longitudinal direction with two pairs of heated stretching rolls by increasing the number of rotations of the rear stretching rolls, to obtain a uniaxially stretched film.

Subsequently, the uniaxially stretched film is preheated, and then stretched in the width direction at a specific temperature while being grasped on both sides by a tenter type stretching machine, to obtain a biaxially stretched film.

After the stretching in the width direction, the biaxially stretched film is heat-treated at a specific temperature. In the heat treatment step, the film may be relaxed in the width direction.

Thus obtanied biaxially oriented polypropylene film can be subjected to, for example, a corona discharge treatment on at least one surface thereof as necessary, and then the film after the treatment is wound by a winder to obtain a film roll.

Each step will be described in detail below.

(Extrusion step)

A polypropylene resin composition comprising a polypropylene resin as a main component is heated and melted at a temperature of 200°C or higher and 300°C or lower in a single-screw or a twin-screw extruder, and sheet-shaped molten polypropylene resin composition extruded from a T-die is brought into contact with a metal cooling roll to be cooled and solidified. Preferably, the obtained unstretched sheet is further cooled by immersion in a water bath.

The temperature of the cooling or the cooling roll and the water bath is preferably set at a temperature which enables prevention of crystallization. When transparency of film needs to be increased, cooling and solidification is preferably conducted with a cooling roll set at 50°C or lower. The transparency of an unstretched sheet can be increased by setting a cooling temperature at 50°C or lower, and preferably the temperature is 40°C or lower. The cooling temperature may preferably be set at 30°C or higher to increase the degree of crystal orientation of a film after sequential biaxial stretching.

The unstretched sheet preferably has a thickness of 3500 μm or less and further preferably 3000 μm or less from the viewpoint of cooling efficiency, and the thickness can be appropriately controlled according to the thickness of a film after sequential biaxial stretching. The thickness of an unstretched sheet can be controlled by adjusting extrusion speed of the polypropylene resin composition and the lip width of a T-die.

(Step of stretching in longitudinal direction)

The lower limit of a stretching ratio in the longitudinal direction is preferably 3 times, more preferably 3.5 times, and particularly preferably 3.8 times. Stretching ratio controlled to above range may lead to an increase in strength and a decrease in thickness nonuniformity.

The upper limit of a stretching ratio in the longitudinal direction is preferably 4.3 times, more preferably 4.2 times, and particularly preferably 4.1 times. Stretching ratio controlled to above range may lead to good stretchability in a stretching step in the width direction, enabling improved productivity.

In the present invention, a polypropylene resin having high stereoregularity is used as a raw material and thus a stretching ratio in the longitudinal direction and the degree of orientation in the longitudinal direction can be lowered, thereby enabling production of a film having heat-resistance and film formation property.

The reason is thought as follows. By lowering the stretching ratio in the longitudinal direction, the degree of orientation of polypropylene molecular chains in the longitudinally stretched film is decreased and thus molecular mobility of the polypropylene molecular chains is likely to be less inhibited. Then, by stretching the longitudinally stretched film in high ratio in the next step of stretching in the width direction and subsequently by heat treating biaxially stretched film at high temperature for sufficient period of time in the heat treatment step, a biaxially oriented laminated polypropylene film having high degree of crystallinity can be finally obtained. As a result, a biaxially oriented laminated polypropylene film having high Young's modulus and high stress at 5% elongation, especially a biaxially oriented laminated polypropylene film having high stress at 5% elongation can be obtained.

Conventionally, when either heat-resistance (heat shrinkage property) or stiffness improves, the other property tends to decrease. However, it is possible to achieve both of heat-resistance (heat shrinkage property) and stiffness in the present invention.

The lower limit of stretching temperature in the longitudinal direction with respect to the melting point of the base layer A (hereinafter may be referred to as TmA) is preferably TmA-40°C, more preferably TmA-37°C, and further preferably TmA-35°C. By adjusting the stretching temperature to the above range, a heat shrinkage rate can be easily decreased and subsequent stretching in the width direction can be easily conducted, leading to a decrease in thickness nonuniformity. The upper limit of stretching temperature in the longitudinal direction is preferably TmA-7°C, more preferably TmA-10°C, and further preferably TmA-12°C. By adjusting the stretching temperature to the above range, difficulty in stretching caused by fusion of a resin to a stretching roll or degradation of film quality caused by an increase in surface roughness can be decreased.

The stretching in the longitudinal direction may be conducted in multiple steps, for example, in 2 steps or more, with 3 pairs or more of stretching rolls.

(Preheating step before stretching in width direction)

Before stretching step in the width direction, a monoaxially stretched film in the longitudinal direction will be heated for softening at a temperature of from TmA+5°C or higher and TmA+20°C or lower. By heating in such a manner, softening of the monoaxially stretched film proceeds, and stretching in the width direction of the film becomes easier. Further, by conducting preheating at a temperature controlling to TmA+20°C or lower, orientation proceeds during stretching in the width direction, leading to enhancement in stiffness. The temperature is more preferably TmA+8°C or higher and TmA+15°C or lower. The maximum temperature in the preheating step is determined as a preheating temperature.

(Stretching step in width direction)

In the step of stretching in the width direction, a uniaxially stretched film is stretched preferably at a temperature of higher than or equal to TmA-8°C and equal to or lower than preheating temperature. The stretching of the film in the width direction may be started when the film temperature reached to a preheating temperature. Alternatively, the film temperature may be raised to the preheating temperature and then lowered, and stretching in the width direction may be started when the lowering temperature reached to a temperature below the preheating temperature.

In the step of stretching in the width direction, the lower limit of the stretching temperature is more preferably TmA-5°C. By adjusting the stretching temperature to the above range, a heat shrinkage rate of the obtained biaxially oriented film can be easily decreased.

In the step of stretching in the width direction, the upper limit of the stretching temperature is preferably TmA+10°C, further preferably TmA+7°C, and particularly preferably TmA+5°C. By adjusting the stretching temperature in the width direction to the above range, nonuniformity of the film can be decreased.

In the step of stretching in the width direction, the lower limit of the final stretching ratio is preferably 9 times, more preferably 9.5 times, and further preferably 10 times. The final stretching ratio of 9 times or more may lead to an increase in stiffness and a decrease in thickness nonuniformity. The upper limit of the stretching ratio in the width direction is preferably 20 times, more preferably 15 times, and further preferably 11 times. By adjusting the stretching ratio to 20 times or less, a heat shrinkage rate can be easily decreased, and it is less likely to generate breaking of the film during stretching.

(Heat treatment step)

The biaxially stretched film is subjected to a heat treatment. The lower limit of the heat treatment temperature is preferably TmA+8°C and particularly preferably TmA+10°C. When the heat treatment is conducted at a temperature of TmA+5°C or higher, orientation of amorphous part may be relaxed, and the obtained film can have lowered heat shrinkage rate and increased laminate strength.

The upper limit of the heat treatment temperature is preferably TmA+20°C, more preferably TmA+15°C, and particularly preferably TmA+12°C. Under the heat treatment temperature controlled to TmA+20°C or lower, crystals formed in the biaxial stretching step and having high orientation are not easily melted, and the obtained film can have increased stiffness. Further, roughness on film surface is not significantly increased, and the obtained film is not easily whitened.

For further lowering of a heat shrinkage rate, the film can be relaxed in the width direction during the heat treatment step. The upper limit of the relaxation rate is 15%, more preferably 10%, and further preferably 8%. The relaxation rate exceeding the range may cause thickness nonuniformity. The lower limit of the relaxation rate is preferably 0% and more preferably 2%. By conducting relaxation in the width direction, a heat shrinkage rate may be easily decreased.

A film surface on the surface layer B of the obtained biaxially oriented laminated polypropylene film is preferably subjected to corona treatment. The corona treatment is conducted with watt density of preferably 11 W/m$^2$ min, more preferably 12 W/m$^2$ min, and further preferably 13 W/m$^2$ min.

[Film properties]

The biaxially oriented laminated polypropylene film of the present invention is characterized by the following properties.

The biaxially oriented laminated polypropylene film of the present invention has "the longitudinal direction" as a direction corresponding to a flow direction in the film production process and also has "the width direction" as a direction orthogonal to the flow direction in the film production process. Hereinafter, the "the longitudinal direction" may be referred to as "MD direction" and "the width direction" may be referred to as "TD direction" in some cases.

(Stress at 5% elongation)

The biaxially oriented laminated polypropylene film of the present invention has the lower limit of stress at 5% elongation (F5: hereinafter, a stress at 5% elongation may be referred to as F5) in the longitudinal direction of 35 MPa, preferably 36 MPa, more preferably 38 MPa, further preferably 40 MPa, and furthermore preferably 42 MPa. The film with high F5 value of 35 MPa or more has increased stiffness. Consequently, when such a film is used in the production of a packaging bag, the bag inherently retains its intended shape. Furthermore, the film with high F5 value remains resistant to deformation during operations like printing, thereby suppressing the likelihood of printing pitch shift during ink transfer.

The upper limit of F5 in the longitudinal direction of the film is preferably 70 MPa, more preferably 65 MPa, further preferably 62 MPa, particularly preferably 61 MPa, and most preferably 60 MPa. When F5 in the longitudinal direction is 70 MPa or less, practical production of film can be facilitated.

The biaxially oriented laminated polypropylene film of the present invention has the lower limit of F5 in the width direction of 95 MPa, preferably 100 MPa, more preferably 105 MPa, and further preferably 110 MPa. The film with high F5 value of 95 MPa or more has increased stiffness. Consequently, when such a film is used in the production of a packaging bag, the bag inherently retains its intended shape. Furthermore, the film with high F5 value remains resistant to deformation during operations like printing, thereby suppressing the likelihood of printing pitch shift during ink transfer.

The upper limit of F5 in the width direction is preferably 200 MPa, more preferably 190 MPa, and further preferably 180 MPa. When F5 in the width direction is 200 MPa or less, practical production of film can be facilitated. In addition, a balance of physical properties between the longitudinal direction and the width direction of the film can be easily improved.

F5 can be controlled to above range by regulating a stretching ratio, a relaxation rate, and temperature conditions in film formation.

(Heat shrinkage rate at 150°C)

The biaxially oriented laminated polypropylene film of the present invention has the upper limit of a heat shrinkage rate at 150°C in the longitudinal direction of 6.0%, preferably 5.0%, more preferably 4.8%, and particularly preferably 4.6% or less.

The upper limit of a heat shrinkage rate at 150°C in the width direction of the film is 5.0%, preferably 4.5%, more preferably 4.0%, further preferably 3.5%, furthermore preferably 3.0%, particularly preferably 2.7, most preferably 2.1%, and particularly most preferably 1.7%.

When the film has a heat shrinkage rate at 150°C in the longitudinal direction of 6.0% or less and a heat shrinkage rate at 150°C in the width direction of 5.0% or less, wrinkles are not easily generated at heat-sealed portion during heat-sealing.

(Young's modulus)

The biaxially oriented laminated polypropylene film of the present invention has the lower limit of Young's modulus in the longitudinal direction of preferably 1.6 GPa, more preferably 1.7 GPa, further preferably 1.8 GPa, particularly preferably 1.9 GPa, and most preferably 2.0 GPa. The film with high Young's modulus in the longitudinal direction of 1.6 GPa or more has increased stiffness. Consequently, when such a film is used in the production of a packaging bag, the bag inherently retains its intended shape. Furthermore, the film with high Young's modulus in the longitudinal direction remains resistant to deformation during operations like printing, thereby suppressing the likelihood of printing pitch shift during ink transfer.

The upper limit of Young's modulus in the longitudinal direction of the film is preferably 3.0 GPa, more preferably 2.9 GPa, further preferably 2.8 GPa, particularly preferably 2.7 GPa, and most preferably 2.6 GPa. When Young's modulus in the longitudinal direction is 3.0 GPa or less, practical production of film can be facilitated.

The biaxially oriented laminated polypropylene film of the present invention has the lower limit of Young's modulus in the width direction of preferably 3.5 GPa, more preferably 3.6 GPa, further preferably 3.7 GPa, and particularly preferably 3.8 GPa. The film with high Young's modulus in the width direction of 3.6 GPa or more has increased stiffness. Consequently, when such a film is used in the production of a packaging bag, the bag inherently retains its intended shape. Furthermore, the film with high Young's modulus in the width direction remains resistant to deformation during operations like printing, thereby suppressing the likelihood of printing pitch shift during ink transfer.

The upper limit of Young's modulus in the width direction is preferably 5.0 GPa, more preferably 4.9 GPa, further preferably 4.8 GPa, and furthermore preferably 4.5 MPa or less. When Young's modulus in the longitudinal direction is 5.0 GPa or less, practical production of film can be facilitated. In addition, a balance of physical properties between the longitudinal direction and the width direction of the film can be easily improved.

The Young's modulus can be controlled to above range by regulating a stretching ratio, a relaxation rate, and temperature conditions in film formation.

(Tensile strength at break)

The biaxially oriented laminated polypropylene film of the present invention has the lower limit of a tensile strength at break in the longitudinal direction of preferably 90 MPa, more preferably 95 MPa, further preferably 100 MPa, and furthermore preferably 110 MPa. When the film has a tensile strength at break of 90 MPa or more, a packaging bag made from the film can have high durability. A higher tensile strength at break is preferred in terms of durability, however, the upper limit of the tensile strength at break is practically 300 MPa in film production.

The biaxially oriented laminated polypropylene film of the present invention has the lower limit of a tensile strength at break in the width direction of preferably 240 MPa, more preferably 260 MPa, further preferably 280 MPa, furthermore preferably 300 MPa, and particularly preferably 340 MPa. When the film has a tensile strength at break of 240 MPa or more, a packaging bag made from the film can have high durability. A higher tensile strength at break is preferred in terms of durability, however, the upper limit of the tensile strength at break is practically 500 MPa in film production.

The tensile strength at break can be controlled to above range by regulating a stretching ratio, a relaxation rate, and temperature conditions in the film formation.

(Tensile elongation at break)

The biaxially oriented laminated polypropylene film of the present invention has the lower limit of tensile elongation at break in the longitudinal direction of preferably 200%, more preferably 220%, further preferably 240%, furthermore preferably 250% or more, particularly preferably 280% or more, and most preferably 300% or more. When the film has a tensile elongation at break of 200% or more, breakage of film and a packaging bag can be decreased. The upper limit of a tensile elongation at break in the longitudinal direction is preferably 350%, and more preferably 340% as practical values.

The biaxially oriented laminated polypropylene film of the present invention has the lower limit of a tensile elongation at break in the width direction of preferably 25%, more preferably 30%, further preferably 35%, furthermore preferably 40%, and particularly preferably 50%. When the film has a tensile elongation at break of 25% or more, breakage of film and a packaging bag can be decreased. The upper limit of a tensile elongation at break in the width direction is preferably 70%, more preferably 65%, and further preferably 60% as practical values.

The tensile elongation at break can be controlled to above range by regulating a stretching ratio, a relaxation rate, and temperature conditions in film formation.

(Haze)

The biaxially oriented laminated polypropylene film of the present invention has the upper limit of haze of preferably 5.0%, more preferably 4.5%, further preferably 4.0%, particularly preferably 3.5%, and most preferably 3.0%. The film having haze of 5.0% or less can be easily applied to purposes requiring transparency. Practically, the lower limit of haze is preferably 0.1%, more preferably 0.2%, further preferably 0.3%, and particularly preferably 0.4%. The film having haze of 0.1% or more can be easily produced.

The film can be controlled haze to the above range by adjusting temperature conditions in film formation, for example, a temperature of a cooling roll (CR).

(Wetting tension)

The biaxially oriented laminated polypropylene film of the present invention has a wetting tension on a film surface on the surface layer B of preferably 38 mN/m or more, more preferably 39 mN/m or more, and further preferably 40 mN/m or more. The film having a wetting tension of 38 mN/m or more have improved adhesiveness to a printing ink and an adhesive used to laminate a film made from other raw materials.

In order to have a wetting tension of 38 mN/m or more, a surface of the film is preferably subjected to physicochemical surface treatments such as corona treatment and flame treatment. In the corona treatment, for example, a film is heated with a preheating roll and a treatment roll, and then corona discharge is preferably conducted in the air. The wetting tension is in correlation with not only the degree of intensity of the corona treatment but also the amount of an antistatic agent bred out, therefore, the treatment is effectively conducted by adjusting the degree of intensity of corona treatment and the amount of an antistatic agent bred out to a preferred range.

(Plane orientation coefficient)

The biaxially oriented laminated polypropylene film of the present invention has the lower limit of a plane orientation coefficient ($\Delta P$) measured from the surface layer B side of preferably 0.0122, more preferably 0.0124, and further preferably 0.0126. When a plane orientation coefficient ($\Delta P$) is 0.0122 or more, thickness nonuniformity of film can be improved. The biaxially oriented laminated polypropylene film has the upper limit of plane orientation coefficient ($\Delta P$) of preferably 0.0134 and more preferably 0.0132. When a plane orientation coefficient ($\Delta P$) is 0.0134 or less, a film can have high heat-resistance at high temperature and high laminate strength. The plane orientation coefficient ($\Delta P$) can be controlled to above range by regulating a stretching ratio, a relaxation rate, and temperature conditions in film formation. The plane orientation coefficient ($\Delta P$) is calculated according to the following equation.

$$\text{Equation: } [(Nx+Ny)/2]\text{-}Nz$$

[Practical characteristics of film]

Practical characteristics of the biaxially oriented polypropylene film of the present invention will be described.

(Film processing)

According to applications, printing can be conducted on the biaxially oriented laminated polypropylene film of the present invention by printing methods such as letterpress printing, lithography printing, intaglio printing, stencil printing, and transfer printing.

In addition, the biaxially oriented laminated polypropylene film of the present invention can be used as a laminated body having heat sealabilty by attaching a sealant film of an unstretched sheet, an uniaxially-oriented film, or a biaxially-oriented film made of a low-density polyethylene, a linear low-density polyethylene, an ethylene-vinyl acetate copolymer, polypropylene, or polyester. In order to increase gas barrier property and heat-resistance, an intermediate layer of an aluminum foil, an unstretched sheet, an uniaxially-oriented film, or a biaxially-oriented film can be provided between the biaxially oriented polypropylene film and the sealant film. The unstretched sheet, the uniaxially-oriented film, and the biaxially-oriented film are made of polyvinylidene chloride, nylon, ethylene-vinylalcohol copolymer, or polyvinyl alcohol. The sealant film can be attached to the biaxially oriented polypropylene film by applying an adhesive by a dry lamination method or a hot melt lamination method.

Further, in order to increase gas barrier property, an aluminum or inorganic oxides can be vapor-deposited on a biaxially-oriented polypropylene film, an intermediate layer film, or a sealant film. The aluminum or inorganic oxides can be vapor-deposited by a method of vacuum deposition, sputtering, or ion plating, and in particular, silica, alumina, or a mixture thereof is preferably vacuum vapor-deposited.

(Laminate strength)

A laminated body comprising the biaxially oriented laminated polypropylene film of the present invention and a sealant film has the lower limit of a laminate strength in each of the longitudinal direction and the width direction of preferably 1.9 N/15mm, more preferably 2.1 N/15mm, further preferably 2.3 N/15mm, furthermore preferably 2.4 N/15mm, particularly preferably 2.5 N/15mm, most preferably 2.6 N/15mm, and particularly most preferably 2.8 N/15mm or more. The laminate strength of 1.9 N/15mm or more enables less breakage of a packaging bag. The upper limit of the laminate strength in the longitudinal direction is preferably 4.0 N/15mm and more preferably 3.5 N/15mm as practical values.

Throughout the specification, the laminate strength is a peel strength determined by attaching an unstretched polypropylene film (a sealant film) to a biaxially oriented polypropylene film (a base film) described in Example by using an adhesive to form a laminated film (laminated body), and subsequently peeling the base film and the sealant film by forming a T-shape.

(Appearance of heat-sealed portion)

In order to form a bag for packaging food, a pre-made bag is filled with contents, and films forming the bag are heated and melted to be sealed hermetically, in one-method. Alternatively, food is filled in a bag during bag making and then the bag is sealed hermetically. Normally, a sealant film comprising polyethylene or polypropylene is laminated on a base film to form a laminated film , and sealant film surfaces of the laminated films are fused with one another. The sealant films are fused and sealed by a heating method in which pressure is applied to the laminated film by a heating plate from a base film side, and a sealing width is set to approximately 10 mm in many cases. During the heat-sealing, a base film is heated too, and shrinkage caused by the heating generates wrinkles. A packaging bag should have less wrinkles from the viewpoint of durability of a packaging bag and also to raise willingness of a customer to buy. The sealing may be conducted at a sealing temperature of around 120°C in some cases, however, a higher sealing temperature is required to increase processing speed in making a packaging bag, and shrinkage of the base film is preferably small even in this case. When a chuck is fused to the opening portion of the bag, sealing at a higher temperature is required.

(Printing pitch shift)

As a basic structure, a packaging film generally has a structure including a laminated film of a printed base film and a sealant film. Printing pitch shift is thought to be generated due to stretch and shrink of a base material of a film when tension and heat are applied to film during a printing step. It is important to decrease defective products resulted from printing pitch shift for effective use of resources and for raising willingness of a customer to buy.

EXAMPLES

Herein after, the present invention will be described in detail with Examples. Characteristics of polypropylene resins and obtained films were measured by the methods described below.

(1) Melt flow rate

Melt flow rate (MFR) was measured at 230°C under a load of 2.16 kgf in accordance with JIS K 7210.

(2) Mesopentad fraction

A mesopentad fraction ([mmmm]%) of polypropylene resin was determined by measuring $^{13}$C-NMR. The mesopentad fraction was calculated in accordance with a method described in Zambelli et. al., Macromolecules, Vol. 6, p925 (1973). The $^{13}$C-NMR measurement was conducted at 110°C with AVANCE500 manufactured by BRUKER by using a solution prepared by dissolving 200 mg of a sample at 135°C in a mixed solvent of o-dichlorobenzene and deuterated benzene (8:2).

(3) Crystallization temperature (Tc) and melting temperature (Tm)

Heat measurement was conducted under nitrogen atmosphere with a differential scanning calorimeter (DSC8500, manufactured by PerkinElmer Japan G.K.). A sample was prepared by cutting out approximately 5 mg of polypropylene resin from a polypropylene resin pellet, and the sample was enclosed in an aluminum pan for the measurement. The sample and the aluminum pan were heated to 230°C and kept for 5 minutes, cooled to 30°C at a rate of -10°C/min, and the exothermic peak temperature was determined as a crystallization temperature (Tc). The sample and the aluminum pan were kept at 30°C for 5 minutes, heated again to 230°C at a rate of 10°C/min, and the main endothermic peak temperature was determined as a melting temperature (Tm).

(4) Film thickness

The thickness of film was measured with Millitron 1202D manufactured by Seiko EM.
Thicknesses of the base layer A and the surface layer B were calculated from a whole thickness of the laminated polypropylene film measured by above method based on a ratio between the discharge amount of polypropylene resin composition for the base layer A and the discharge amount of polypropylene resin composition for the surface layer B.

(5) Haze

Haze was measured at 23°C with NDH5000 manufactured by NIPPON DENSHOKU INDUSTRIES CO., LTD in accordance with JIS K 7105.

(6) Tensile test

Tensile strength in each of the longitudinal direction and the width direction of the film was measured at 23°C in accordance with JIS K 7127. The film was cut into a sample with the size of 15 mm × 200 mm and then the sample was set in a tensile tester (dual column desktop tester Instron 5965, manufactured by Instron Japan Company Limited) with a chuck width of 100 mm. The tensile test was performed at a tensile speed of 200 mm/min. From the obtained stress-strain curve, a stress at 5% elongation F5 was determined.

From the slope of the straight line at the beginning of the elongation, Young's modulus was determined. A tensile strength at break and a tensile elongation at break were defined as a strength and an elongation at the time of sample breakage, respectively.

(7) Heat shrinkage rate

Heat shrinkage rate was measured by the following method in accordance with JIS Z 1712. The film was cut in the longitudinal and width directions into a sample with the size of 20 mm in width and 200 mm in length. The sample was hung in a hot air oven set at 150°C and heated for 5 minutes. The length of the sample after heating was measured, and the heat shrinkage rate was determined by calculating the ratio of a shrunk length with respect to the length of the sample before heating.

(8) Refractive index and plane orientation coefficient

Both of refractive index and plane orientation coefficient were measured at 23°C on a surface layer B side of a film at a wavelength of 589.3 nm with an Abbe refractometer manufactured by ATAGO CO., LTD. Refractive indexes along the longitudinal direction and the width direction were represented by Nx and Ny, respectively, and a refractive index in the thickness direction was represented by Nz. The plane orientation coefficient was calculated according to the following equation.

$$\text{Equation: } [(Nx+Ny)/2]-Nz.$$

When a film had surface layers B laminated on each side of the film, an average of plane orientation coefficients of sides was calculated, and the average was determined as plane orientation coefficient of the film.

(9) Wetting tension

Wetting tension of a corona treated surface of a film after aging at 23°C and relative humidity of 50% for 24 hours was measured by the following procedure in accordance with JIS K 6768-1999.

1) Measurement is conducted in a standard test room atmosphere (see JIS K 7100) set at a temperature of 23°C and relative humidity of 50%.

2) A test piece is placed on a substrate of a hand coater. Then, several drops of a test mixed liquid are dropped onto the test piece, and immediately after that, the test mixed liquid is uniformly spread by a wire bar. When the test mixed liquid is spread with a cotton swab or a brush, the liquid is quickly spread in an area of at least 6 cm$^2$ or more. The amount of the liquid should be enough to make a thin layer but not enough to make puddling. The wet tension is judged by observing the liquid film of the test mixed liquid in bright light with respect to the state of the liquid film after 3 seconds. When the state of the application is retained for 3 seconds or more without breaking of the liquid film, the sample is judged to be wet. In this case, the examination proceeds to the next step with a mixed liquid having next higher surface-tension. Conversely, when the liquid film is broken in 3 seconds or less, the examination proceeds to the next step with a mixed liquid having next lower surface-tension. This operation is repeated until a mixed liquid capable of wetting the surface of the test piece accurately for 3 seconds is selected.

3) The wire bar is washed with methanol and dried for every use.

4) The operation of selecting a mixed liquid capable of wetting the surface of the test piece for 3 seconds is performed at least three times. The surface tension of the mixed liquid selected as described above is determined as a wet tension of the film.

(10) Laminate strength of laminated film (laminated body)

Laminate strength was measured by the following procedure.

1) Production of laminated body (laminated film) comprising biaxially oriented laminated polypropylene film and sealant film

The laminated body (laminated film) was produced with a continuous-type dry laminating machine as described below. A corona treated surface on the surface layer B of the obtained biaxially oriented laminated polypropylene film was gravure-coated with an adhesive in an amount when dried of 3.0 g/m2. The biaxially oriented laminated polypropylene film was then introduced into a drying zone and dried at 80°C for 5 seconds. Subsequently, the biaxially oriented laminated polypropylene film was laminated with a sealant film between rolls provided on the downstream at a roll pressure of 0.2 MPa and a roll temperature of 60°C. The obtained laminated film was subjected to an aging treatment at 40°C for 3 days in a wound state.

The adhesive, specifically an adhesive for dry lamination, was prepared by mixing 28.9% by mass of a main agent (TM569, manufactured by Toyo-Morton, Ltd.), 4.00% by mass of a curing agent (CAT10L, manufactured by Toyo-Morton, Ltd.), and 67.1% by mass of ethyl acetate. As a sealant film, an un-stretched polypropylene film (PYLEN (registered trademark) CT P1128, thickness: 30 μm, manufactured by TOYOBO CO., LTD.) was used.

2) Measurement of laminate strength of laminated film (laminated body)

The obtained laminated film (laminated body) was cut into a strip having a long side in each of the longitudinal direction and the width direction of the biaxially oriented polypropylene film (length: 200 mm, width: 15 mm). Then, a laminate strength (N/15mm) when the film was peeled at an angle of 90° to form a T-shape at a tensile speed of 200 mm/min in an environment at 23°C was measured with a tensile tester (dual column desktop tester Instron 5965 manufactured by Instron Japan Company Limited). The measurement was conducted three times in each of the longitudinal direction and the width direction, and the average of measurement values in each direction was determined as a laminate strength in the longitudinal direction and the width direction.

(11) Appearance evaluation of heat-sealed portion

Heat-sealing strength of the laminated film (laminated body) was measured by the following method in accordance with JIS Z 1707, and an appearance evaluation of heat-sealed portion at a temperature of achieved (or maximum) heat-sealing strength was conducted.

First, a sealant film of a laminated film (laminated body) was heat sealed on a sealant film of another laminated film (laminated body) with one another at a sealing pressure of 10 N/cm2 and a temperature of from 100°C to 250°C for sealing time of 1 second.

The heat-sealed laminated film (laminated body) was cut into a test piece with the size of 15 mm in width × 200 mm in length. The test piece was then set to a tensile tester (dual column desktop tester Instron 5965, manufactured by Instron Japan Company Limited) with initial length between chucks of 100 mm, and a peel strength when the test piece was peeled to form a T-shape at a tensile speed of 200 mm/min was measured. A graph having a horizontal axis for temperature and a vertical axis for heat-sealing strength was drawn. In the graph, the maximum value of the heat-sealing strength was defined as an achieved (or maximum) heat-sealing strength and the corresponding temperature was defined as an achieved (or maximum) heat-sealing temperature. The appearance of heat-sealed portion at the achieved (or maximum) heat-sealing temperature was evaluated from degrees of peeling of base layer and wrinkles in accordance with the following 2 levels.

  Good: Without peeling and wrinkles of film
  Bad: With generation of peeling and/or wrinkles of film

(Example 1)

[Base layer A]

As polypropylene resins, 80 parts by mass of propylene homopolymer PP-1 (FLX80E4, MFR=7.5 g/10 min, [mmmm]=98.9%, Tc=116°C, Tm=163°C, manufactured by Sumitomo Chemical Co., Ltd.) and 20 parts by mass of propylene homopolymer PP-2 (FS2012, MFR=3.0 g/10 min, [mmmm]=98.4%, Tc=116°C, Tm=163°C, manufactured by Sumitomo Chemical Co., Ltd.) were blended.

To 100 parts by mass of the propylene homopolymer mixture, 1.4 parts by mass of a mixture of stearyldiethanolamine monostalate, stearyldiethanolamine distearate, and stearyldiethanolamine (KYM-4K, manufactured by Matsumoto Yushi-Seiyaku Co., Ltd.) was added and mixed. The mixture was then melt-kneaded and granulated in an extruder equipped with a pelletizer to produce pellets of polypropylene resin composition for the base layer A. The polypropylene resin composition had a mesopentad fraction of 98.8%, TmA of 163°C, and MFR of 6.5 g/10 min.

[Surface layer B]

As polypropylene resins, 58 parts by mass of propylene homopolymer PP-3 (F-300SP, MFR=2.5 g/10 min, [mmmm]=93.8%, Tc=112°C, Tm=159°C, manufactured by Prime Polymer Co., Ltd.) and 42 parts by mass of propylene homopolymer PP-4 (FL4, MFR=4.2 g/10 min, [mmmm]=97.3%, Tc=112°C, Tm=165°C, manufactured by Japan Polypropylene Corporation) were blended. The propylene homopolymer mixture was then melt-kneaded and granulated in an extruder equipped with a pelletizer to produce pellets of polypropylene resin composition for the surface layer B . The polypropylene resin composition had a mesopentad fraction of 95.3%, TmB of 161°C, and MFR of 3.5 g/10 min.

The polypropylene resin for the base layer A and the polypropylene resin for the surface layer B were heated at 250°C to be melted in a multilayer feed block in an extruder, and the melted polypropylene resin compositions were co-extruded at 250°C from a T-die into a sheet shape while laminating the polypropylene resin compositions into the structure of "surface layer B/base layer A/surface layer B".

The obtained molten sheet was contacted with a cooling roll set at 37°C and then introduced to a water bath set at 29°C to produce an unstretched sheet. The produced unstretched sheet was then stretched 4.0 times at 140°C in the longitudinal direction with two pairs of rolls. The longitudinally stretched sheet was clipped on both sides, placed in a hot air oven, and preheated at 174°C. After that, the longitudinally stretched sheet was stretched 10 times at 160°C in the width direction, and then heat treated at 175°C in the width direction under relaxation at 7%.

One surface of the surface layer B which was the wound side of the obtained biaxially oriented polypropylene film, was subjected to a corona treatment with corona treatment equipment manufactured by KASUGA DENKI, INC. under the condition of 13 W/m$^2$ min. The film was then wound with a winder, and a biaxially oriented polypropylene film having a thickness of 17 $\mu$m was obtained. The layers comprised in the film had thicknesses of "surface layer B/base layer A/surface layer B"=1/15/1 $\mu$m.

Characteristics of polypropylene resin raw materials used are shown in Table 1, raw material compositions of each layer and film formation conditions are shown in Table 2, and properties of the obtained film are shown in Table 3. As shown in Table 3, peeling and wrinkles of an unstretched polypropylene film and a laminating film were not generated during heat-sealing, and the obtained film had high stiffness and high laminate strength.

(Example 2)

A film was produced in the same manner as Example 1 except that thicknesses of layers comprised in the film and a relaxation rate in heat treatment were changed as shown in Table 2, and a film having a thickness of 19 $\mu$m was obtained. Thicknesses of layers comprised in the film were "surface layer B/base layer A/surface layer B"=1/17/1 $\mu$m. As shown in Table 3, peeling and wrinkles of an unstretched polypropylene film and a laminating film were not generated during heat-sealing, and the obtained film had high stiffness and high laminate strength.

(Example 3)

A film was produced in the same manner as Example 2 except that a preheating temperature, a stretching temperature in the width direction, and a heat treatment temperature were changed as shown in Table 2, and a film having a thickness of 19 $\mu$m was obtained. Thicknesses of layers comprised in the film were "surface layer B/base layer A/surface layer B"=1/17/1 $\mu$m. As shown in Table 3, peeling and wrinkles of an unstretched polypropylene film and a laminating film were not generated during heat-sealing, and the obtained film had high stiffness and high laminate strength.

(Example 4)

A film was produced in the same manner as Example 3 except that thicknesses of layers comprised in the film and preheating temperature were changed as shown in Table 2, and a film having a thickness of 16 $\mu$m was obtained. Thicknesses of layers comprised in the film were "surface layer B/base layer A/surface layer B"=1/14/1 $\mu$m. As shown in Table 3, peeling and wrinkles of an unstretched polypropylene film and a laminating film was not generated during heat-sealing, and the obtained film had high stiffness and high laminate strength.

(Example 5)

A film was produced in the same manner as Example 4 except that thicknesses of layers comprised in the film and a heat treatment temperature were changed as shown in Table 2, and a film having a thickness of 17 $\mu$m was obtained. Thicknesses of layers comprised in the film were "surface layer B/base layer A/surface layer B"=1/15/1 $\mu$m.

As shown in Table 3, peeling and wrinkles of an unstretched polypropylene film and a laminating film were not generated during heat-sealing, and the obtained film had high stiffness and high laminate strength.

(Example 6)

A film was produced in the same manner as Example 2 except that film thickness was changed to 19 μm and thicknesses of layers comprised in the film were "surface layer B/base layer A/surface layer B"=2/15/2 μm as shown in Table 2. As shown in Table 3, peeling and wrinkles of laminating film were not generated during heat-sealing, and the obtained film had high stiffness and high laminate strength.

(Comparative Example 1)

A film was produced in the same manner as Example 2 except that a raw material for the surface layer B had equivalently high mesopentad fraction to a raw material for the base layer A as shown in Table 2. A film having a thickness of 19 μm was obtained. Thicknesses of layers comprised in the film were "surface layer B/base layer A/surface layer B"=1/17/1 μm. As shown in Table 3, peeling and wrinkles of laminating film were not generated during heat-sealing and the obtained film had high stiffness, however, the film had low laminate strength.

(Comparative Example 2)

A film was produced in the same manner as Example 2 except that a draw ratio in the longitudinal direction was changed as shown in Table 2. A film having a thickness of 19 μm was obtained. Thicknesses of layers comprised in the film were "surface layer B/base layer A/surface layer B"=1/17/1 μm. As shown in Table 3, the obtained film had high stiffness and high laminate strength, however, peeling and wrinkles of laminating film were generated at heat-sealed portion during heat-sealing.

(Comparative Example 3)

A film was produced in the same manner as Example 2 except that a heat treatment temperature was changed as shown in Table 2. A film having a thickness of 19 μm was obtained. Thicknesses of layers comprised in the film were "surface layer B/base layer A/surface layer B"=1/17/1 μm. As shown in Table 3, the obtained film had high stiffness and high laminate strength, however, peeling and wrinkles of laminating film were generated at heat-sealed portion during heat-sealing.

(Comparative Example 4)

A film was produced in the same manner as Example 1 except that a draw ratio in the longitudinal direction and a heat treatment temperature were changed as shown in Table 2. A film having a thickness of 17 μm was obtained. Thicknesses of layers comprised in the film were "surface layer B/base layer A/surface layer B"=1/15/1 μm. As shown in Table 3, the obtained film had high stiffness and high laminate strength, however, peeling and wrinkles of laminating film were generated at heat-sealed portion during heat-sealing.

(Comparative Example 5)

As polypropylene resins, 50 parts by mass of propylene homopolymer PP-1 (FLX80E4, MFR=7.5 g/10 min, [mmmm]=98.9%, Tc=116°C, Tm=163°C, manufactured by Sumitomo Chemical Co., Ltd.) and 50 parts by mass of propylene homopolymer PP-3 (F-300SP, MFR=3.0 g/10 min, [mmmm]=93.8%, Tc=112°C, Tm=159°C, manufactured by Prime Polymer Co., Ltd.) were blended.

To 100 parts by mass of the propylene homopolymer mixture, 1.4 parts by mass of a mixture of stearyldiethanolamine monostalate, stearyldiethanolamine distearate, and stearyldiethanolamine (KYM-4K, manufactured by Matsumoto Yushi-Seiyaku Co., Ltd.) was added and mixed. The mixture was then melt-kneaded and granulated in an extruder equipped with a pelletizer to produce pellets of polypropylene resin composition for the base layer A. The polypropylene resin composition had a mesopentad fraction of 96.4%, TmA of 161°C, and MFR of 5.3 g/10 min.

A film was produced in the same manner as Example 2 except that above produced polypropylene resin composition was used as a raw material to produce the base layer A as shown in Table 2. A film having a thickness of 19 μm was obtained. Thicknesses of layers comprised in the film were "surface layer B/base layer A/surface layer B"=1/17/1 μm. As shown in Table 3, the obtained film had high laminate strength, however, the film had low stiffness and peeling and wrinkles of laminating film were generated at heat-sealed portion during heat-sealing.

(Comparative Example 6)

A film was produced in the same manner as Example 1 except that film thickness was changed to 19 μm and thicknesses of layers comprised in the film were changed to "surface layer B/base layer A/surface layer B"=3/13/3 μm as shown in Table 2. As shown in Table 3, the obtained film had high laminate strength, however, the film had low stiffness and peeling and wrinkles of laminating film were generated at heat-sealed portion during heat-sealing.

(Comparative Example 7)

As polypropylene resins, 58 parts by mass of propylene homopolymer PP-1 (FLX80E4, MFR=7.5 g/10 min, [mmmm]=98.9%, Tc=116°C, Tm=163°C, manufactured by Sumitomo Chemical Co., Ltd.) and 42 parts by mass of propylene homopolymer PP-4 (FL4, MFR=4.2 g/10 min, [mmmm]=97.3%, Tc=112°C, Tm=165°C, manufactured by Japan Polypropylene Corporation) were blended. The propylene homopolymer mixture was then melt-kneaded and granulated in an extruder equipped with a pelletizer to produce pellets of polypropylene resin composition for the surface layer B. The polypropylene resin composition had a mesopentad fraction of 98.2%, TmB of 164°C, and MFR of 6.1 g/10 min.

A film was produced in the same manner as Comparative Example 1 except that above produced polypropylene resin composition was used as a raw material to produce the surface layer B as shown in Table 2. A film having a thickness of 19 μm was obtained. As shown in Table 3, the obtained film had no wrinkles of laminating film at heat-sealed portion during heat-sealing and the film had high stiffness, however, the film had low laminate strength.

[Table 1]

| | PP-1 | PP-2 | PP-3 | PP-4 |
|---|---|---|---|---|
| Copolymerization amount of components other than propylene (mol%) | 0 | 0 | 0 | 0 |
| MFR (g/10min) | 7.5 | 3.0 | 2.5 | 4.2 |
| [mmmm] (%) | 98.9 | 98.4 | 93.8 | 97.3 |
| Tc (°C) | 116 | 116 | 112 | 112 |
| Tm (°C) | 163 | 163 | 159 | 165 |

[Table 2]

| | | | Example 1 | Example 2 | Example 3 | Example 4 | Example 5 | Example 6 | Comparative Example 1 | Comparative Example 2 | Comparative Example 8 | Comparative Example 4 | Comparative Example 5 | Comparative Example 6 | Comparative Example 7 |
|---|---|---|---|---|---|---|---|---|---|---|---|---|---|---|---|
| Base layer A | PP-1 | % by mass | 78.9 | 78.9 | 78.9 | 78.9 | 78.9 | 78.9 | 78.9 | 78.9 | 78.9 | 78.9 | 49.3 | 78.9 | 78.9 |
| | PP-2 | % by mass | 19.7 | 19.7 | 19.7 | 19.7 | 19.7 | 19.7 | 19.7 | 19.7 | 19.7 | 19.7 | - | 19.7 | 19.7 |
| | PP-3 | % by mass | - | - | - | - | - | - | - | - | - | - | 49.3 | - | - |
| | KYM-4K | % by mass | 1.4 | 1.4 | 1.4 | 1.4 | 1.4 | 1.4 | 1.4 | 1.4 | 1.4 | 1.4 | 1.4 | 1.4 | 1.4 |
| | mmmm | % | 98.8 | 98.8 | 98.8 | 98.8 | 98.8 | 98.8 | 98.8 | 98.8 | 98.8 | 98.8 | 96.4 | 98.8 | 98.8 |
| | TmA | °C | 163 | 163 | 163 | 163 | 163 | 163 | 163 | 163 | 163 | 163 | 161 | 163 | 163 |
| | MFR | g/10min | 6.5 | 6.5 | 6.5 | 6.5 | 6.5 | 6.5 | 6.5 | 6.5 | 6.5 | 6.5 | 5.3 | 6.5 | 6.5 |
| Surface layer B | PP-1 | % by mass | - | - | - | - | - | - | 80 | - | - | - | - | - | 58 |
| | PP-2 | % by mass | - | - | - | - | - | - | 20 | - | - | - | - | - | - |
| | PP-3 | % by mass | 68 | 58 | 58 | 58 | 58 | 58 | - | 58 | 58 | 58 | 58 | 68 | - |
| | PP-4 | % by mass | 42 | 42 | 42 | 42 | 42 | 42 | - | 42 | 42 | 42 | 42 | 42 | 42 |
| | mmmm | % | 95.3 | 95.3 | 95.3 | 95.3 | 95.3 | 95.3 | 98.8 | 95.3 | 95.3 | 95.3 | 95.3 | 95.3 | 98.2 |
| | TmB | °C | 161 | 161 | 161 | 161 | 161 | 161 | 163 | 161 | 161 | 161 | 161 | 161 | 164 |
| | MFR | g/10min | 3.5 | 3.5 | 3.5 | 3.5 | 3.5 | 3.5 | 6.5 | 3.5 | 3.5 | 3.5 | 3.5 | 3.5 | 6.1 |

(continued)

| | | | Example 1 | Example 2 | Example 3 | Example 4 | Example 5 | Example 6 | Comparative Example 1 | Comparative Example 2 | Comparative Example 8 | Comparative Example 4 | Comparative Example 5 | Comparative Example 6 | Comparative Example 7 |
|---|---|---|---|---|---|---|---|---|---|---|---|---|---|---|---|
| Extrusion temperature | Base layer | °C | 250 | 250 | 250 | 250 | 250 | 250 | 260 | 250 | 250 | 250 | 3.5 250 | 3.5 250 | 6.1 250 |
| | Surface layer | °C | 250 | 250 | 250 | 250 | 250 | 260 | 260 | 260 | 250 | 250 | 250 | 250 | 250 |
| Cooling roll temperature | | °C | 37 | 37 | 37 | 37 | 37 | 37 | 37 | 37 | 37 | 37 | 37 | 37 | 37 |
| Water bath temperature | | °C | 29 | 29 | 29 | 29 | 29 | 29 | 29 | 29 | 29 | 29 | 29 | 29 | 29 |
| Stretching temperature in longitudinal direction | | °C | 140 | 140 | 140 | 140 | 140 | 140 | 140 | 140 | 140 | 140 | 140 | 140 | 140 |
| Stretching ratio in longitudinal direction | | - | 4.0 | 4.0 | 4.0 | 4.0 | 4.0 | 4.0 | 4.0 | 4.5 | 4.0 | 4.5 | 4.0 | 4.0 | 4.0 |
| Preheating temperature | | °C | 174 | 174 | 172 | 170 | 170 | 174 | 174 | 174 | 174 | 174 | 174 | 174 | 174 |
| Stretching temperature in width direction | | °C | 160 | 160 | 158 | 158 | 158 | 160 | 160 | 160 | 160 | 160 | 160 | 160 | 160 |
| Stretching ratio in width direction | | - | 10.0 | 10.0 | 10.0 | 10.0 | 10.0 | 10.0 | 10.0 | 10.0 | 10.0 | 10.0 | 10.0 | 10.0 | 10.0 |
| Heat treatment temperature | | °C | 175 | 176 | 173 | 173 | 172 | 175 | 175 | 176 | 170 | 170 | 175 | 175 | 175 |
| Relaxation rate in heat treatment | | % | 7.0 | 6.0 | 6.0 | 6.0 | 6.0 | 6.0 | 6.0 | 6.0 | 6.0 | 7.0 | 6.0 | 7.0 | 6.0 |
| Corona treatment | | W/m²·min | 13 | 13 | 13 | 13 | 13 | 13 | 13 | 13 | 13 | 13 | 13 | 13 | 13 |

| | | Exam-ple 1 | Exam-ple 2 | Exam-ple 3 | Exam-ple 4 | Exam-ple 5 | Exam-ple 6 | Compara-tive Exam-ple 1 | Compara-tive Exam-ple 2 | Compara-tive Exam-ple 8 | Compara-tive Exam-ple 4 | Compara-tive Exam-ple 5 | Compara-tive Exam-ple 6 | Compara-tive Exam-ple 7 |
|---|---|---|---|---|---|---|---|---|---|---|---|---|---|---|
| Film thickness | μm | 17 | 19 | 19 | 16 | 17 | 19 | 19 | 19 | 19 | 17 | 19 | 19 | 19 |
| Thicknesses of Layer B / Layer A / Layer B | μm | 1/15/1 | 1/17/1 | 1/17/1 | 1/14/1 | 1/15/1 | 2/15/2 | 1/17/1 | 1/17/1 | 1/17/1 | 1/15/1 | 1/17/1 | 3/1313 | 1/17/1 |
| Thickness rate of base layer A | % | 88 | 89 | 89 | 88 | 88 | 79 | 89 | 89 | 89 | 89 | 89 | 68 | 89 |

EP 4 371 733 A1

[Table 3]

| | | | Example 1 | Example 2 | Example 8 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|
| Haze | | % | 2.3 | 1.8 | 1.8 | 1.6 | 1.6 | 2.1 | 2.0 | 1.9 | 1.6 | 1.4 | 1.8 | 2.0 | 1.8 |
| F5 | Longitudinal direction | MPa | 46 | 42 | 42 | 44 | 42 | 39 | 45 | 46 | 43 | 44 | 33 | 34 | 46 |
| | Width direction | MPa | 104 | 97 | 101 | 108 | 114 | 99 | 105 | 103 | 116 | 117 | 92 | 94 | 104 |
| Young's modulus | Longitudinal direction | GPa | 2.0 | 2.1 | 1.9 | 2.0 | 1.9 | 1.8 | 2.8 | 2.3 | 2.0 | 2.1 | 2.0 | 1.6 | 2.1 |
| | Width direction | GPa | 3.5 | 3.9 | 3.6 | 3.7 | 4.0 | 3.6 | 4.0 | 3.9 | 4.3 | 4.2 | 3.4 | 3.5 | 4.2 |
| Tensile strength at break | Longitudinal direction | MPa | 110 | 118 | 116 | 122 | 122 | 105 | 121 | 126 | 120 | 126 | 140 | 100 | 119 |
| | Width direction | MPa | 310 | 315 | 361 | 349 | 362 | 306 | 326 | 297 | 305 | 368 | 360 | 298 | 325 |
| Tensile elongation at break | Longitudinal direction | % | 320 | 314 | 291 | 277 | 287 | 327 | 304 | 280 | 278 | 266 | 260 | 335 | 308 |
| | Width direction | % | 57 | 45 | 54 | 44 | 44 | 69 | 42 | 68 | 43 | 41 | 60 | 62 | 41 |
| Heat shrinkage rate at 150°C | Longitudinal direction | % | 4.6 | 4.8 | 4.4 | 4.8 | 6.1 | 5.2 | 4.6 | 6.5 | 6.9 | 6.2 | 6.2 | 6.4 | 4.8 |
| | Width direction | % | 0.8 | 2.1 | 2.4 | 4.0 | 4.8 | 3.6 | 1.5 | 3.4 | 5.5 | 5.6 | 6.9 | 5.5 | 1.6 |

EP 4 371 733 A1

23

(continued)

| | | | Example 1 | Example 2 | Example 8 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|
| Refractive index | Nx | - | 1.505 | 1.505 | 1.504 | 1.504 | 1.504 | 1.504 | 1.506 | 1.507 | 1.504 | 1.505 | 1.503 | 1.504 | 1.504 |
| | Ny | - | 1.525 | 1.524 | 1.525 | 1.525 | 1.525 | 1.523 | 1.526 | 1.525 | 1.526 | 1.525 | 1.523 | 1.523 | 1.526 |
| | Nz | - | 1.502 | 1.501 | 1.501 | 1.501 | 1.501 | 1.502 | 1.501 | 1.502 | 1.501 | 1.500 | 1.500 | 1.502 | 1.501 |
| Plane orientation coefficient | $\Delta P$ | - | 0.0131 | 0.0130 | 0.0133 | 0.0133 | 0.0134 | 0.0116 | 0.0146 | 0.0146 | 0.0144 | 0.0146 | 0.0131 | 0.0111 | 0.0144 |
| Wetting tension | Treated surface | mN/m | 40 | 40 | 40 | 40 | 40 | 40 | 40 | 40 | 40 | 40 | 40 | 40 | 40 |
| Laminate strength | Longitudinal direction | N/15mm | 3.3 | 2.9 | 2.7 | 2.5 | 2.5 | 3.0 | 1.8 | 2.3 | 2.2 | 2.1 | 2.6 | 3.3 | 1.9 |
| Laminate strength | Width direction | N/15mm | 3.0 | 3.3 | 2.7 | 3.2 | 2.7 | 3.0 | 1.9 | 2.1 | 2.0 | 2.0 | 2.8 | 3.0 | 1.9 |
| Appearance of heat-sealed portion | | - | Very good | Good | Good | Good | Good | Good | Good | Bad | Bad | Bad | Bad | Bad | Good |

INDUSTRIAL APPLICABILITY

The biaxially oriented laminated polypropylene film of the present invention has high heat-resistance, high stiffness, and high laminate strength, therefore, the biaxially oriented laminated polypropylene film can be suitably used as a packaging material. The biaxially oriented laminated polypropylene film can be widely used as an alternative to a biaxially oriented PET film, and also has significantly high moistureproof property. The biaxially oriented laminated polypropylene film in combination with a sealant film comprising a polypropylene resin can be suitably used as a mono-material package having high recyclability and environmental friendliness.

The biaxially oriented laminated polypropylene film of the present invention is suitable not only as packaging material but also as insulating films for capacitors and motors, back sheets for solar cells, high barrier films provided with inorganic oxide layers, for use at higher temperature as base films for transparent conductive films such as ITO, and for use such as separate films requiring stiffness.

Further, the biaxially oriented laminated polypropylene film of the present invention enables coating and printing at high temperature with coating agents, inks, laminating adhesives, and the like, which have been conventionally difficult to be used, thereby improving production efficiency.

**Claims**

1. A biaxially oriented laminated polypropylene film comprising at least a base layer A and a surface layer B, wherein the biaxially oriented laminated polypropylene film satisfies the following requirements 1) to 7):

   1) a rate of a thickness of the base layer A with respect to a whole thickness of the film is 70% or more and 98% or less,
   2) a polypropylene resin comprised in the base layer A has a mesopentad fraction of 97.0% or more and 99.9% or less,
   3) a polypropylene resin comprised in the surface layer B has a mesopentad fraction of 80.0% or more and 96.5% or less,
   4) a stress at 5% elongation F5 in a longitudinal direction of the film is 35 MPa or more,
   5) a stress at 5% elongation F5 in a width direction of the film is 95 MPa or more,
   6) a heat shrinkage rate at 150°C in the longitudinal direction of the film is 6.0% or less, and
   7) a heat shrinkage rate at 150°C in the width direction of the film is 5.0% or less.

2. The biaxially oriented laminated polypropylene film according to claim 1, wherein the biaxially oriented laminated polypropylene film has a plane orientation coefficient on the surface layer B side of 0.0134 or less.

3. The biaxially oriented laminated polypropylene film according to claim 1 or 2, wherein the biaxially oriented laminated polypropylene film has a wetting tension on a film surface on the surface layer B side of 38 mN/m or more.

4. The biaxially oriented laminated polypropylene film according to any one of claims 1 to 3, wherein the biaxially oriented laminated polypropylene film has a haze of 5.0% or less.

5. The biaxially oriented laminated polypropylene film according to any one of claims 1 to 4, wherein the biaxially oriented laminated polypropylene film has a whole thickness of 5.3 $\mu$m or more and 202 $\mu$m or less.

6. A laminated body comprising the biaxially oriented laminated polypropylene film according to any one of claims 1 to 5 and an unstretched polypropylene film.

7. The laminated body according to claim 6, wherein the laminated body has a laminate strength represented by a peel strength when peeled at 90° to form a T-shape of 1.9 N/15mm or more and 10 N/15mm or less in both of a longitudinal direction and a width direction of the laminated body.

<table>
<tr><td colspan="2">**INTERNATIONAL SEARCH REPORT**</td><td>International application No.<br>**PCT/JP2022/024733**</td></tr>
</table>

**A.    CLASSIFICATION OF SUBJECT MATTER**

*B29C 55/12*(2006.01)i; *B32B 27/32*(2006.01)i; *B65D 65/40*(2006.01)i; *C08F 10/06*(2006.01)i; *C08L 23/12*(2006.01)i; *C08J 5/18*(2006.01)i

FI:    B32B27/32 E; C08L23/12; B65D65/40 D; B29C55/12; C08F10/06; C08J5/18 CES

According to International Patent Classification (IPC) or to both national classification and IPC

**B.    FIELDS SEARCHED**

Minimum documentation searched (classification system followed by classification symbols)

B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2017/169952 A1 (TOYOBO CO., LTD.) 05 October 2017 (2017-10-05)<br>entire text | 1-7 |
| A | JP 11-192680 A (TORAY IND INC) 21 July 1999 (1999-07-21)<br>entire text | 1-7 |
| A | JP 5-177790 A (CHISSO CORP) 20 July 1993 (1993-07-20)<br>entire text | 1-7 |
| A | JP 2015-199228 A (GUNZE KK) 12 November 2015 (2015-11-12)<br>entire text | 1-7 |
| A | JP 10-180963 A (TORAY IND INC) 07 July 1998 (1998-07-07)<br>entire text | 1-7 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/024733**

| Patent document cited in search report | | | Publication date (day/month/year) | Patent family member(s) | | | Publication date (day/month/year) |
|---|---|---|---|---|---|---|---|
| WO | 2017/169952 | A1 | 05 October 2017 | TW | 201801927 | A | |
| | | | | KR | 10-2018-0122459 | A | |
| | | | | CN | 108884246 | A | |
| JP | 11-192680 | A | 21 July 1999 | (Family: none) | | | |
| JP | 5-177790 | A | 20 July 1993 | (Family: none) | | | |
| JP | 2015-199228 | A | 12 November 2015 | (Family: none) | | | |
| JP | 10-180963 | A | 07 July 1998 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013177645 A
- WO 2016182003 A
- WO 2013111779 A
- WO 2017169952 A

**Non-patent literature cited in the description**

- **ZAMBELLI.** *Macromolecules,* 1973, vol. 6, 925